# EUROPÄISCHE PATENTSCHRIFT

(11) **EP 2 112 100 B1**
(45) Veröffentlichungstag und Bekanntmachung des Hinweises auf die Patenterteilung: **20.12.2017**
(21) Anmeldenummer: 09157197.6
(22) Anmeldetag: 02.04.2009
(51) Int. Cl.: B65G 47/26, B65G 47/31, B65G 60/00

(54) **Vorrichtung und Verfahren zum Umsortieren von Stückgutzusammenstellungen**
Method and device for sorting piece good collections
Dispositif et procédé destinés au tri d'assemblages de marchandises au détail

(30) Priorität: 24.04.2008 DE 102008020622
(43) Veröffentlichungstag der Anmeldung: 28.10.2009
(73) Patentinhaber: Krones AG, 93073 Neutraubling (DE)
(72) Erfinder: Eschlbeck, Richard, 83569, Vogtareuth (DE); Wolfgang, Huber, 85567, Grafing (DE)
(74) Vertreter: Bittner, Bernhard

(56) Entgegenhaltungen:
- EP-A- 0 213 305
- EP-A- 1 046 598
- WO-A-2004/039705
- US-A1- 2006 133 917
- US-A1- 2007 280 814

## Beschreibung

Die vorliegende Erfindung bezieht sich auf eine Vorrichtung und ein Verfahren zum Umsortieren von Stückgutzusammenstellungen. Die Erfindung wird unter Bezugnahme auf Zusammenstellungen von Gebinden beschrieben und insbesondere von Gebinden für Getränkebehältnisse. Es wird auch darauf hingewiesen, dass der Anwendungsbereich der vorliegenden Erfindung nicht auf derartige Gebinde beschränkt ist. Aus dem Stand der Technik sind unterschiedliche Vorrichtungen zum Transportieren und Sortieren bzw. Palettieren von Gebinden bekannt. So beschreibt die WO 2004/039705 A1 ein Verfahren und eine Vorrichtung zum Anordnen und Orientieren von Paketen. Dabei werden Pakete zugeführt und in eine vorgegebene Zusammenstellung verbracht.

Die EP 1 046 598 A1 beschreibt eine Vorrichtung zur Herstellung palettierfähiger Lagen von Gebindepackungen. Auch bei dieser Vorrichtung werden Reihen von Gebinden antransportiert und zu regelmäßigen Gebindezusammenstellungen zusammengefasst.

Die EP 213 305 beschreibt eine Vorrichtung zum Ent- und Beladen von Paletten. Dabei werden zunächst Paletten mit Gebinden entladen, anschließend Reihen von Gebinden mehreren Speichermodulen zugeführt und mit Hilfe dieser Speichermodule, welche parallel zueinander angeordnet sind, umverteilt, so dass die Zusammenstellung der Paletten geändert werden kann. Bei dieser Vorgehensweise ist es jedoch, wie gesagt, erforderlich, dass eine Vielzahl von parallel zueinander angeordneten Speichereinheiten vorgesehen ist, auf welche die Gebinde zunächst verteilt werden, um anschließend wieder in anderer Zusammenstellung angeordnet werden zu können. Die US 2007/0280814 A1 offenbart eine Vorrichtung mit den Merkmalen des Oberbegriffs des Anspruchs 1 und ein Verfahren mit den Schritten des Oberbegriffs des Anspruchs 9. Der vorliegenden Erfindung liegt daher die Aufgabe zugrunde, eine Vorrichtung und ein Verfahren zur Verfügung zu stellen, welche in besonders vorteilhafter Weise eine Umsortierung von Stückgutzusammenstellungen erlaubt. Unter einem Umsortieren von Stückgutzusammenstellungen wird insbesondere ein Entpalettieren dieser Stückgutzusammenstellungen verstanden. Weiterhin wird jedoch unter einem Umsortieren auch eine beliebige Änderung der Anordnung einzelner Stückgüter verstanden, wie insbesondere aber nicht ausschließlich eine sogenannte Kommissionierung, bei der Gebinde unterschiedlicher Gattungen zusammengestellt werden.

Diese Aufgaben werden erfindungsgemäß durch eine Vorrichtung nach Anspruch 1 sowie ein Verfahren nach Anspruch 9 erreicht. Vorteilhafte Ausführungsformen und Weiterbildungen sind Gegenstand der Unteransprüche. Erfindungsgemäß sind die Transportrichtung in der die Zuführeinrichtung die Stückgüter transportiert und die Transportrichtung, in der Abführeinrichtung die Stückgüter transportiert, gleich. Auf diese Weise wird eine besonders effiziente Umverteilung der Stückgüter erreicht.

Unter einer Umverteilungseinheit wird eine Einheit verstanden, welche eine geometrische Anordnung der Stückgüter ändert bzw. umverteilt. So ist es möglich, dass die Umverteilungseinheit aus einer Lage von Stückgütern eine Reihe von hintereinander angeordneten Stückgütern bildet. Umgekehrt können auch Reihen von Stückgütern zu Lagen umgewandelt werden. Vorzugsweise weist die Vorrichtung einen Entlader auf, der lagenweise Gebindelagen bzw. Stückgutzusammenstellungen auf die Zuführeinrichtung, welche bevorzugt als Transporttisch ausgeführt ist, verbringt.

Dabei kann dieser Entlader Elemente wie Klemmen, aufweisen, es ist jedoch auch möglich, dass die Stückgutzusammenstellung durch Saugen oder Verschieben oder durch Greifen mittel Haken auf die Zuführeinrichtung verbracht wird. Diese Zuführeinrichtung verbringt anschließend die Stückgutzusammenstellung in einer noch geschlossenen Formation oder einer im Wesentlichen noch geschlossenen Formation unterhalb der Umverteilungseinheit. Erfindungsgemäß weist die Vorrichtung eine Abstandserzeugungseinheit auf, welche stromaufwärts bezüglich der Umverteilungseinheit angeordnet ist und welche in einer Transporteinrichtung der Stückgutzusammenstellung Abstände zwischen den einzelnen Stückgütern erzeugt. Durch diese erzeugten Abstände zwischen den Stückgütern oder zwischen Gruppen der Stückgüter ist es möglich, dass die Aufnahmeelemente der Umverteilungseinheit diese einzelnen Stückgüter oder Gruppen greifen können.

Vorzugsweise weisen die Aufnahmeelemente Greifelemente auf, welche beispielsweise zwei gegenüberliegende Platten aufweisen, zwischen denen das einzelne Stückgut oder eine Gruppe von Stückgütern aufnehmbar ist. Diese Aufnahmeelemente verschieben anschließend das betreffende Stückgut gegenüber der jeweiligen Transporteinrichtung, wie beispielsweise der Zuführeinrichtung oder der Abstandserzeugungseinheit.

Vorzugsweise weist die Abstandserzeugungseinheit eine Transporteinrichtung auf, welche die Stückgüter in der gleichen Transporteinrichtung wie die Zuführeinrichtung, jedoch mit einer höheren Transportgeschwindigkeit als die Zuführeinrichtung transportiert. Auf diese Weise werden durch die höhere Geschwindigkeit dieser Transporteinrichtung Abstände in der Transportrichtung zwischen den einzelnen Stückgütern erzeugt. Mit anderen Worten werden durch die Geschwindigkeitsunterschiede zwischen einem Transporttisch, auf dem die Lage erstmalig aufgesetzt wird d.h. der Zuführungseinheit und der weiteren Transporteinheit bzw. der Abstandserzeugungseinheit, welche ebenfalls als Transporttisch ausgeführt ist und welche bevorzugt wenigstens teilweise unterhalb der Umverteilungseinheit angeordnet ist, bereits Lücken für das Auflösen der Stückgutzusammenstellung gebildet, wobei diese Lücken genauer das Eingreifen der Aufnahmeelemente der Umverteilungseinheit ermöglichen.

Bei einer weiteren vorteilhaften Ausführungsform ist wenigstens eine Transporteinheit eine Transportbahn und es wird in diesem Zusammenhang darauf hingewiesen, dass sowohl die Zuführeinrichtung als auch die Abführeinheiten vorzugsweise Transportbänder sind oder Transportbänder aufweisen. Es könnten jedoch auch mehrere Transportbänder hintereinander unter der Umverteilungseinheit vorhanden sein.

Bei einer weiteren vorteilhaften Ausführungsform weisen wenigstens zwei Transportbänder unterschiedliche Reibungskoeffizienten bezüglich der zu transportierenden Gebinde auf. Besonders bevorzugt weist das Transportband der Zuführeinrichtung einen anderen Reibungskoeffizienten auf, als das Transportband der Abstandserzeugungseinheit. Durch diese unterschiedlichen Reibwerte der beiden Transporteinheiten bzw. Transporttische können besonders vorteilhafter Weise Abstände zwischen den Stückgütern bzw. den Gebinden hergestellt werden.

Vorzugsweise weist die Vorrichtung eine Erfassungseinrichtung auf, welche die Lage einzelner Stückgüter innerhalb einer Stückgutzusammenstellung erkennt. Es wäre jedoch auch möglich, dass bestimmte Lagenbildmuster der Stückgüter bereits vorab bekannt sind. Über die von der zu entladenden Palette und/oder am Entlader bekannte oder erkannte definierte Lagebildmuster übernimmt das Aufnahmeelement der Umverteilungseinheit Einzelgebinde oder Gebindegruppen.

Diese Einzelgebinde oder Gebindegruppen können dabei über ein mechanisches Klemmsystem, ein Saugsystem, ein Hakensystem oder ähnliches übernommen werden. Bei den Gebindegruppen handelt es sich bevorzugt um mehrere, in einer bestimmten Anordnung zueinander stehende Gebinde. Die Umverteilungseinheit löst diese Gebinde oder Gebindegruppen aus dem Lagenverbund, so dass diese in die Abführeinrichtung bzw. ein Gebindepuffertransportsystem einlaufen können.

Das Aufnahmeelement der Umverteilungseinheit verschiebt dabei die Gebinde und nimmt durch eine bevorzugt lineare in mehrere Achsen arbeitende und/oder auch eine drehende Bewegung die Gebinde aus dem Verbund und verbringt diese auf ein weiteres Transportband, welches direkt mit der Abführeinheit verbunden ist. Auch wäre es möglich, dass das Aufnahmeelement die Gebinde lediglich gegenüber einer Transporteinrichtung wie beispielsweise dem Transportband der Abstandserzeugungseinheit verschiebt. Auf diese Weise wird die Stückgutzusammenstellung nacheinander aufgelöst.

Bevorzugt kann damit das Aufnahmeelement in mehrere voneinander unabhängige Richtungen bewegt werden und zuzüglich auch bezüglich einer Ebene der Transporteinrichtung gehoben oder abgesenkt werden und gegebenenfalls zusätzlich noch gedreht werden. Es wäre auch möglich, zwei oder mehrere Umverteilungseinheiten in der Transportrichtung des Stückguts bevorzugt direkt hintereinander anzuordnen.

Bei einer weiteren vorteilhaften Ausführungsform weist die Vorrichtung eine weitere Abführeinrichtung auf, welche neben der ersten Abführeinrichtung angeordnet ist. Auf diese Weisen können die nunmehr aufgelösten Stückgüter evtl. auch verschiedener Gattungen, parallel zueinander abtransportiert werden.

Nach dem Auflösen einer ersten Stückgutzusammenstellung bzw. Gebindelage kann anschließend eine gleiche oder andere Gebindesorte mit einem neuen oder aus dem gleichen Lagenbild der Umverteilungseinheit zugeführt werden und die Auflösung dieser neuen Stückgutzusammensetzung erfolgt in ähnlicher Art und Weise, wobei dies auch von der Anordnung der einzelnen Gebinde innerhalb der Stückgutzusammensetzung abhängt. Falls beispielsweise eine neue Gebindesorte entladen wurde, werden die so separierten Gebinde vorzugsweise in die weitere Abführeinrichtung geführt.

Vorzugsweise weist die Vorrichtung eine zweite Umverteilungseinheit aufweist, welche stromabwärts bezüglich der Abführeinrichtung angeordnet ist, wobei diese zweite Umverteilungseinheit ein Aufnahmeelement aufweist, welches in wenigstens zwei unterschiedliche Richtungen bewegbar ist. Mit Hilfe dieser zweiten Umverteilungseinheit kann bevorzugt eine Kommissionierung der Gebinde erreicht werden.

Wie oben erwähnt, sollte die Anordnung der einzelnen Gebinde innerhalb der Stückgutzusammenstellung zwangsweise an dem Entlader bekannt sein. Die Position der einzelnen Gebinde kann, wie erwähnt, auch in der Zuführeinrichtung der entladenen Lage oder innerhalb der Umverteilungseinheit über Kameras oder ähnliche optische Erkennungssysteme erkannt werden.

Vorzugsweise verläuft wenigstens eine Transporteinrichtung teilweise unterhalb der Umverteilungseinheit. Dies bedeutet, dass sich die Stückgüter auch unabhängig von einem Aufnahme- bzw. Greifvorgang bewegen. So wäre es möglich, dass einzelne Stückgüter nicht gegriffen werden, sondern direkt von der Zuführeinrichtung ohne Interaktion der Umverteilungseinheit in die Abführeinrichtung einlaufen.

Bei einer weiteren vorteilhaften Ausführungsform weist die Vorrichtung eine Palettenfördereinheit zum Transportieren von Paletten auf. So ist es möglich, dass die auf diese Weise entleerten Paletten wieder verwendet werden, um die umsortierten Gebinde auf ihnen anzuordnen. Vorzugsweise werden dabei die Paletten in der gleichen Richtung transportiert, wie die Stückgüter bzw. Gebinde.

Die vorliegende Erfindung ist weiterhin auf ein Verfahren zum Umsortieren von Stückgutzusammenstellungen und insbesondere von Gebindezusammenstellungen nach Anspruch 9 gerichtet. Vorzugsweise werden die Stückgüter hintereinander in einer Transportrichtung abtransportiert.

In einem bevorzugten Verfahren werden die einzelnen Stückgüter an wenigstens zwei nebeneinander angeordnete Abführeinheiten übergeben. Auf diese Weise ist es insbesondere möglich, unterschiedliche Gattungen von Stückgütern getrennt zu fördern.

Bei einem weiteren bevorzugten Verfahren werden die Stückgüter auf wenigstens einer Abführeinheit einreihig hintereinander transportiert. Erfindungsgemäß werden zwischen den einzelnen Stückgütern vor der Aufnahme mit dem Aufnahmeelement Abstände gebildet. Dabei werden vorzugsweise die Gebinde mit einer ersten Transporteinrichtung mit einer langsameren Geschwindigkeit und einer darauf folgenden Transporteinrichtung mit einer höheren Geschwindigkeit transportiert. Erfindungsgemäß werden die Stückgüter von der Zuführeinrichtung und der Abführeinheit in der gleichen Transportrichtung transportiert. Vorzugsweise ist weiterhin auf ein Verfahren nach Anspruch 12 gerichtet. Dabei wird die Stückgutzusammenstellung nach einem vorgegebenen Muster ausgebildet. Vorzugsweise wird dieses Muster von einer Steuerungseinrichtung vorgegeben oder kann auch von dem Maschinenbediener frei gewählt werden.

Auf diese Weise ist es möglich, insgesamt ein Verfahren zu ermöglichen, bei dem zunächst eine Entpalettierung einer Stückgutzusammenstellung stattfindet und anschließend so getrennte Stückgüter wieder zu beliebigen Zusammenstellungen zusammengestellt werden. Dies kann insbesondere dann interessant sein, wenn Zusammenstellungen einer bestimmten Gattung aufgetrennt werden sollen und Zusammenstellungen mit mehreren Gattungen unterschiedlicher Getränke gebildet werden soll.

Weitere Vorteile und Ausführungsformen ergeben sich aus den beigefügten Zeichnungen: Darin zeigen:
- Fig. 1: Eine schematische Darstellung einer erfindungsgemäßen Vorrichtung;
- Fig. 2: Eine schematische Darstellung einer Anlage mit der Vorrichtung aus Fig. 1.

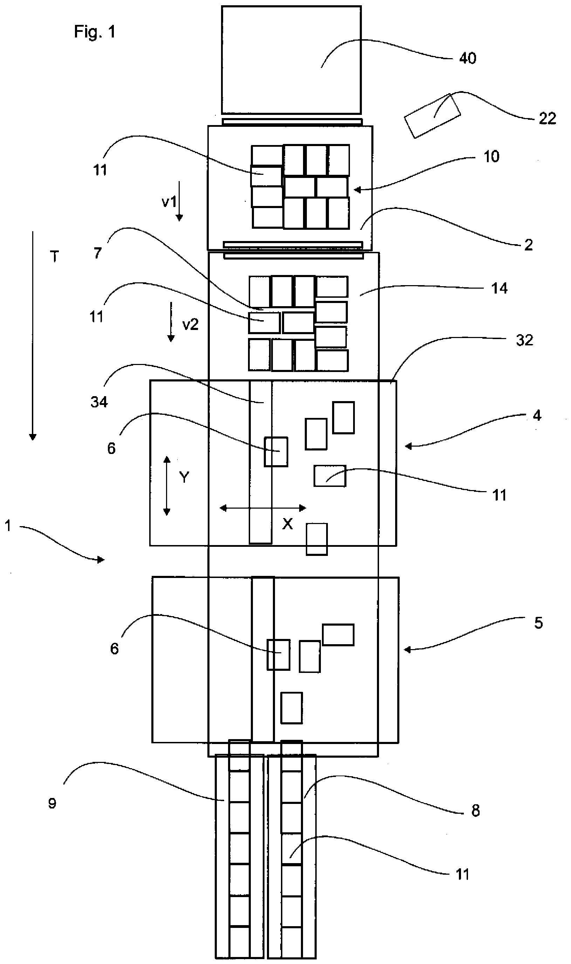

Fig. 1 zeigt eine schematische Darstellung einer erfindungsgemäßen Vorrichtung 1. Diese Vorrichtung weist eine erste nur grob schematisch dargestellte Beschickungseinrichtung 40 auf, mittels derer Stückgutzusammenstellungen 10 auf eine Zuführeinrichtung 2 verbracht werden. Diese Beschickungseinrichtung 40 kann dabei beispielsweise Schiebeelemente oder auch Greifelemente aufweisen, welche die Stückgutzusammenstellung 10 auf die Zuführeinrichtung 2 bringen. Die Stückgutzusammenstellung 10 setzt sich aus einer Vielzahl von Stückgütern 11 hier in Form von Gebinden zusammen. Dabei sind diese Gebinde 11 teilweise horizontal und teilweise vertikal ausgerichtet.

Diese Zuführeinrichtung 2 transportiert die Stückgutzusammenstellung 10 mit einer ersten Geschwindigkeit v1 und zwar in Richtung des Transportpfades T d.h. in Richtung einer Abstandserzeugungseinheit 14. Bei dieser Abstandserzeugungseinheit 14 handelt es sich um ein zweites Transportband, welches die Stückgüter 11 mit einer höheren Geschwindigkeit v2 fördert als die Zuführeinrichtung 2. Auf diese Weise können zwischen den einzelnen Stückgütern 11 in der Transportrichtung T Lücken 7 erzeugt werden, mittels denen die Stückgüter 11 gegriffen werden können.

Die Abstandserzeugungseinheit bzw. Transporteinrichtung 14 erstreckt sich auch unter eine erste Umverteilungseinheit 4 sowie eine zweite Umverteilungseinheit 5. Diese Umverteilungseinheit 4 weist dabei ein Aufnahmeelement 6 auf, welches sowohl in x-Richtung als auch in y-Richtung bewegbar ist. Bevorzugt ist dieses Aufnahmeelement auch in z-Richtung d.h. hier senkrecht zur Figurenebene bewegbar, um die Stückgüter 11 anzuheben. Damit ist es sowohl möglich, dass die Stückgüter angehoben und verschoben werden als auch, dass sie gegenüber der Transporteinrichtung 14 verschoben werden. Das Bezugszeichen 34 bezieht sich auf einen Arm, an dem das Aufnahmeelement 6 angeordnet ist.

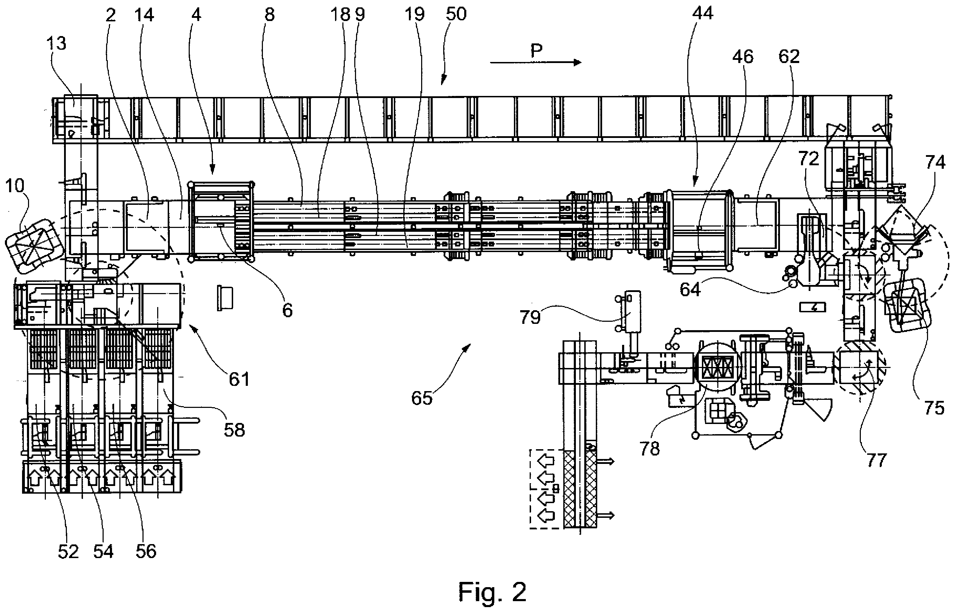

Daneben ist das Aufnahmeelement 6 derart gestaltet, dass es auch um eine Achse drehbar ist, die senkrecht zu der Figurenebene von Fig. 2 steht. Auf diese Weise ist es möglich, einzelne Stückgüter auch um beispielsweise 90° zu drehen. Bei der in Fig. 1 gezeigten Vorrichtung sind zwei Umverteilungseinheiten 4, 5 hintereinander angeordnet, die jedoch derart aufeinander abgestimmt sind, dass in besonders effizienter Weise sämtliche Stückgüter gedreht und in eine richtige Position verschoben werden können. Mit Hilfe der beiden Umverteilungseinheiten 4, 5 werden die Stückgüter schließlich derart auf der Transporteinrichtung 4 verschoben, dass sie bei weiterer Bewegung der Transporteinrichtung 14 direkt in eine Abführeinrichtung 8, in welchen sie in einer Reihe gefördert werden, abgeführt werden können.

Sobald der Vorgang beendet ist, kann die Vorrichtung mit einer weiteren Stückgutzusammenstellungen bestückt werden und der Vorgang kann sich wiederholen. Falls es sich bei dieser zweiten Stückgutzusammenstellung um eine Vielzahl von Gebinden einer anderen Sorte handelt, können die beiden Umverteilungseinheiten auch so gestaltet werden, dass sämtliche Stückgüter 11 in die zweite Abführeinrichtung 9 verbracht werden. Bezugszeichen 22 bezieht sich auf eine Bildaufnahmeeinrichtung zur Beobachtung der Stückgutzusammenstellungen bzw. der geometrischen Anordnung der einzelnen Stückgüter.

Fig. 2 zeigt eine Darstellung einer Anlage 60 mit der in Fig. 1 gezeigten Vorrichtung 1. In diesem Falle können der Vorrichtung 1 vier verschiedene Sorten von Gebinden mittels Bestückungseinrichtungen 52, 54, 56, 58 zugeführt werden. Genauer gesagt ist eine Überführungseinheit 61 vorgesehen, welche wahlweise von jeder der Bestückungseinrichtungen 52, 54, 56, 68 Gebindezusammenstellungen 10 übernehmen kann und zu der Zuführeinrichtung 2 verbringen kann. In diesem Fall kann es sich dabei um eine Transporteinrichtung handeln, welche die Gebinde auf einer durch den Kreis k angedeuteten Kreisbahn fördert.

Die jeweiligen Paletten 13, die sich unter den Stückgutzusammenstellungen befinden, werden zu einem Palettenförderer 50 verbracht, der die leeren Paletten ebenfalls in Fig. 2 von links nach rechts fördert. Die erfindungsgemäße Vorrichtung bewirkt nun, dass die Stückgutzusammenstellungen aufgelöst werden und je nach Gattung der Gebinde eine der vier Abführeinrichtungen 8, 9, 18, 19 verbracht werden. Mit diesen Abführeinrichtungen, die auch als Gebindepuffertransportsysteme bezeichnet werden können, werden die Gebinde entlang des Pfeils P von links nach rechts gefördert.

Das Bezugszeichen 44 bezieht sich auf eine weitere Umverteilungseinheit mit Aufnahmeelement 46, die hier jedoch dazu dient, um aus dem in den vier Abführeinrichtungen 8, 9, 18 und 19 ankommenden Gebinde 11 wiederum zu Stückgutzusammenstellungen zusammenzustellen. In diesem Falle werden schließlich wiederum (nicht gezeigt) Stückgutzusammenstellungen produziert, welche anschließend mittels eines Ausleitbandes 62 abtransportiert werden. Das Bezugszeichen 64 bezieht sich auf eine weitere Überführungseinheit, welche die Stückgutzusammenstellungen hier auf die mittlerweile ebenfalls antransportierten Paletten aufsetzt. Das Bezugszeichen 74 bezieht sich auf eine Zuführeinrichtung für Zwischenlagen 75, wobei diese Zwischenlagen jeweils zwischen einzelnen Lagen an Stückgutzusammensetzungen abgelegt werden. Über einem Eckförderer 77 werden die nun vollständig zusammengesetzten Lagen aus Stückgutzusammensetzungen und Zwischenlagen zu einer Verpackungseinheit 78 gefördert, in welcher sie verpackt werden. Eine Inspektionseinheit 79 prüft den korrekten Verpackungszustand der nunmehr fertigen bestückten und gebundenen Paletten.

Das Bezugszeichen 65 bezieht sich auf die gesamte Anlage zum Kommissionieren und das Bezugszeichen 72 auf eine Transporteinrichtung für die Stückgutzusammenstellungen

### Bezugszeichenliste

- 1: Vorrichtung
- 2: Zuführeinrichtung
- 4,5,44: Umverteilungseinheit
- 7: Lücken
- 6,46: Aufnahmeelement
- 8,9: Abführeinrichtung
- 10: Stückgutzusammenstellung
- 11: Stückgüter
- 13: Paletten
- 14: Abstandserzeugungseinheit
- 34: Arm bzw. Träger
- 40: Beschickungseinrichtung
- 50: Palettenförderer
- 52,54,56,58: Bestückungseinrichtungen
- 60: Anlage
- 61: Überführungseinheit
- 62: Ausleitband
- 64: Überführungseinheit
- 74: Zuführeinrichtung
- 75: Zwischenlagen
- 77: Eckförderer
- 78: Verpackungseinheit
- 79: Inspektionseinheit
- k: Kreisbahn
- T: Transportpfad
- P: Pfeil
- V1,V2: Geschwindigkeit
- X, Y: Richtung
- P: Pfeil

## Patentansprüche

1. Vorrichtung (1) geeignet und vorgesehen zum Umsortieren von Gebindezusammenstellungen (10) mit einer Zuführeinrichtung (2), welche geeignet und bestimmt ist eine Gebindezusammenstellung (10) mit einer Vielzahl von in vorgegebenen geometrischen Positionen angeordneten Gebinden (11) entlang eines ersten vorgegebenen Transportpfades zu transportieren, mit wenigstens einer entlang des Transportpfads (T) der Gebindezusammenstellung (10) angeordneten Umverteilungseinheit (4), wobei die Umverteilungseinheit (4) wenigstens ein Aufnahmeelement (6) zum Aufnehmen eines einzelnen Gebindes (11) der Gebindezusammenstellung (10) oder einer Gruppe von Gebinden (11) der Gebindezusammenstellung aufweist und einer Abführeinrichtung (8), die entlang des Transportpfads (T) stromabwärts bezüglich der Umverteilungseinheit (4) angeordnet ist, wobei das Aufnahmeelement (6) der Umverteilungseinheit (4) in wenigstens zwei unterschiedliche Richtungen (X, Y) bewegbar ist, und das wenigstens eine Aufnahmeelement (6) derart gestaltet ist, dass es einzelne Gebinde (11) oder Gruppen von Gebinden (11) aus der Gebindezusammenstellung (10) entnimmt und zu der Abführeinrichtung (8) verbringt, durch die die Gebinde abtransportiert werden,
**dadurch gekennzeichnet, dass**
die Transportrichtung, in der die Zuführeinrichtung (2) die Gebinde (11) transportiert und die Transportrichtung, in der die Abführeinrichtung (8) die Gebinde (11) transportiert, gleich sind und die Vorrichtung eine Abstandserzeugungseinheit (14) aufweist, welche stromabwärts bezüglich der Zuführeinrichtung (2) und stromaufwärts bezüglich der Umverteilungseinheit (4) angeordnet ist und in einer Transportrichtung (T) der Gebindezusammenstellung (10) Abstände zwischen einzelnen Gebinden (11) erzeugt.

2. Vorrichtung nach Anspruch 1,
**dadurch gekennzeichnet, dass**
die Abstandserzeugungseinheit (14) eine Transporteinrichtung (14) aufweist, welche die Gebinde (11) in der gleichen Transportrichtung (T) wie die Zuführeinrichtung (2) jedoch mit einer höheren Transportgeschwindigkeit als die Zuführeinrichtung (2) fördert.

3. Vorrichtung (1) nach wenigstens einem der vorangegangenen Ansprüche,
**dadurch gekennzeichnet, dass**
wenigstens eine Transporteinrichtung (2, 8, 14) ein Transportband ist.

4. Vorrichtung (1) nach Anspruch 3,
**dadurch gekennzeichnet, dass**
wenigstens zwei Transportbänder (2, 8, 14) unterschiedliche Reibungskoeffizienten bezüglich der zu transportierenden Gebinde (11) aufweisen.

5. Vorrichtung (1) nach wenigstens einem der vorangegangenen Ansprüche,
**dadurch gekennzeichnet, dass**
die Vorrichtung (1) eine weitere Abführeinrichtung (9) aufweist, welche neben der ersten Abführeinrichtung (8) angeordnet ist.

6. Vorrichtung (1) nach wenigstens einem der vorangegangenen Ansprüche,
**dadurch gekennzeichnet, dass**
die Vorrichtung eine zweite Umverteilungseinheit (44) aufweist, welche stromabwärts bezüglich der Abführeinrichtung (8) angeordnet ist, wobei diese zweite Umverteilungseinheit (44) ein Aufnahmeelement (46) aufweist, welches in wenigstens zwei unterschiedliche Richtungen bewegbar ist.

7. Vorrichtung (1) nach wenigstens einem der vorangegangenen Ansprüche
**dadurch gekennzeichnet, dass**
wenigstens eine Transporteinrichtung (14) teilweise unterhalb der Umverteilungseinheit (4) verläuft.

8. Vorrichtung (1) nach wenigstens einem der vorangegangenen Ansprüche,
**dadurch gekennzeichnet, dass**
die Vorrichtung (1) eine Palettenfördereinheit (13) zum Transportieren von Paletten aufweist.

9. Verfahren zum Umsortieren von Stückgutzusammenstellungen (10) und insbesondere von Gebindezusammenstellungen (10) mit den Schritten:
- Zuführen einer Stückgutzusammenstellung (10) mit einer Vielzahl von in vorgegebenen geometrischen Positionen angeordneten Stückgütern (11) entlang eines ersten Transportpfads (T) zu einer Umverteilungseinheit (4, 44) mittels einer Zuführeinrichtung (2);
- Aufnahme einzelner Stückgüter (11) oder Gruppen von Stückgütern (11) mit einem Aufnahmeelement (6) der Umverteilungseinheit (4, 44);
- Übergabe der einzelnen Stückgüter (11) oder Gruppen von Stückgütern (11) an eine Abführeinheit (8, 62) wobei wenigstens einzelne der Stückgüter (11) zwischen der Aufnahme durch das Aufnahmeelement (6) und der Übergabe an die Abführeinheit (8, 62) in wenigstens zwei zueinander unterschiedliche Richtungen (X, Y) bewegt werden
- Abtransport der Stückgüter (11) mit der Abführeinheit (8, 62), wobei das Verfahren **dadurch gekennzeichnet ist, dass** die Stückgüter (11) von der Zuführeinrichtung (2) und der Abführeinheit (8) in der gleichen Transportrichtung (T) transportiert werden und dass der Verfahrensschritt Zuführen einer Stückgutzusammenstellung (10) mit einer Vielzahl von in vorgegebenen geometrischen Positionen angeordneten Stückgütern (11) entlang eines ersten Transportpfads (T) zu einer Umverteilungseinheit (4) mittels einer Zuführeinrichtung (2) die folgenden Schritte aufweist:
- Zuführen der Stückgutzusammenstellung (10) zu einer Abstandserzeugungseinheit (14) mittels der Zuführeinrichtung (2);
- Erzeugen Abstände zwischen einzelnen Stückgüter (11) der Stückgutzusammenstellung (10) in der Transportrichtung (T) der Stückgutzusammenstellung (10) mittels der Abstandserzeugungseinheit (14);
- Zuführen der einzelnen Stückgüter (11) der Stückgutzusammenstellung (10) zu der Umverteilungseinheit (4).

10. Verfahren nach Anspruch 9,
**dadurch gekennzeichnet, dass**
die einzelnen Stückgüter (11) an wenigstens zwei nebeneinander angeordnete Abführeinheiten (8, 9) übergeben werden.

11. Verfahren nach Anspruch 9 oder 10,
**dadurch gekennzeichnet, dass**
die Stückgüter (11) auf wenigstens einer Abführeinheit (8) einreihig hintereinander transportiert werden.

12. Verfahren nach Anspruch 9,
**dadurch gekennzeichnet, dass** es weiterhin die Schritte umfasst:
- Zuführen einer ersten Gattung von Stückgütern (11) an eine Umverteilungseinheit (4);
- Zuführen einer zweiten von der ersten Gattung unterschiedlichen Gattung von Stückgütern (11) an die Umverteilungseinheit (4);
- Aufnehmen und Ablegen, wobei das Aufnahmeelement (6) sowohl Stückgüter (11) der ersten Gattung als auch Stückgüter (11) der zweiten Gattung aufnimmt und diese Stückgüter (11) derart ablegt, dass eine Stückgutzusammenstellung (10) aus Stückgütern (11) der ersten Gattung und Stückgütern (11) der zweiten Gattung gebildet wird.

13. Verfahren nach Anspruch 12,
**dadurch gekennzeichnet, dass**
die wenigstens eine Gattung an Stückgütern (11) durch eine Abführeinheit (8) der Umverteilungseinheit (4) zugeführt wird.

## Claims

1. Apparatus (1) suitable and provided for resorting piece goods assortments (10), comprising a supply device (2) which is suitable and determined to transport a piece goods assortment (10) containing a plurality of piece goods (11) arranged in predefined positions along a first predefined transport path, comprising at least one redistribution unit (4) arranged along the transport path (T) of the piece goods assortment (10), wherein the redistribution unit (4) comprises at least one pick-up element (6) for picking up an individual item of piece goods (11) of the piece goods assortment (10) or a group of piece goods (11) of the piece goods assortment, and a discharge device (8) which is arranged downstream of the redistribution unit (4) along the transport path (T), wherein the pick-up element (6) of the redistribution unit (4) is movable in at least two different directions (X, Y), and the at least one pick-up element (6) is configured in such a way that it removes individual piece goods (11) or groups of piece goods (11) from the piece goods assortment (10) and transfers said piece goods to the discharge device (8), through which the piece goods are transported,
**characterized in that**
the transport direction, in which the supply device (2) transports the piece goods (11), and the transport direction, in which the discharge device (8) transports the piece goods (11), are identical and the apparatus comprises a distance creation unit (14), which is arranged downstream of the supply device (2) and upstream of the redistribution unit (4) and creates distances between the individual piece goods (11) in a transport path (T) of the piece goods assortment (10).

2. Apparatus according to claim 1,
**characterized in that**
the distance creation unit (14) comprises a transport device (14) which conveys the piece goods (11) in the same transport direction (T) as the supply device (2) but at a higher transport speed than the supply device (2).

3. Apparatus (1) according to at least one of the preceding claims, **characterized in that**
at least one transport device (2, 8, 14) is a transport belt.

4. Apparatus (1) according to claim 3,
**characterized in that**
at least two transport belts (2, 8, 14) have different coefficients of friction in relation to the piece goods (11) to be transported.

5. Apparatus (1) according to at least one of the preceding claims, **characterized in that**
the apparatus (1) comprises a further discharge device (9) which is arranged next to the first discharge device (8).

6. Apparatus (1) according to at least one of the preceding claims, **characterized in that**
the apparatus comprises a second redistribution unit (44) which is arranged downstream of the discharge device (8), wherein this second redistribution unit (44) comprises a pick-up element (46) which is movable in at least two different directions.

7. Apparatus (1) according to at least one of the preceding claims, **characterized in that**
at least one transport device (14) runs partially below the redistribution unit (4).

8. Apparatus (1) according to at least one of the preceding claims, **characterized in that**
the apparatus (1) comprises a pallet conveyor unit (13) for transporting pallets.

9. Method for resorting piece goods assortments (10) and in particular packaging unit assortments (10), comprising the steps:
- supplying a piece goods assortment (10), containing a plurality of piece goods (11) arranged in predefined geometric positions, by means of a supply device (2) along a first transport path (T) to a redistribution unit (4, 44),
- picking up individual piece goods (11) or groups of piece goods (11) by means of a pick-up element (6) of the redistribution unit (4, 44),
- transferring the individual piece goods (11) or groups of piece goods (11) to a discharge unit (8, 62), wherein at least some of the piece goods (11) are moved in at least two directions (X, Y) which are different from one another between the pick-up by the pick-up element (6) and the transfer to the discharge unit (8, 62),
- transporting the piece goods (11) away by means of the discharge unit (8, 62) wherein the method is **characterized in that** the piece goods (11) are transported in the same transport direction (T) by the supply device (2) and the discharge device (8) and that the method step of supplying a piece goods assortment (10) with a plurality of piece goods (11) arranged in predetermined geometric positions along a first transport path (T) to a redistribution unit (4) [is ensued] by means of a supply device (2) comprising the following steps:
- supplying the piece goods assortments (10) to a distance creation unit (14) by means of the supply device (2);
- create distances between individual piece goods (11) of the piece goods assortments (10) in the transport direction (T) of the piece goods assortments (10) by means of the distance creation unit (14);
- supplying the individual piece goods (11) of the piece goods assortments (10) to the redistribution unit (4).

10. Method according to claim 9,
**characterized in that**
the individual piece goods (11) are transferred to at least two discharge units (8, 9) arranged next to one another.

11. Method according to claim 9 or 10,
**characterized in that**
the piece goods (11) are transported one behind the other in one row on at least one discharge unit (8).

12. Method according to claim 9,
**characterized in that** it further comprises the steps:
- supplying a first type of piece goods (11) to a redistribution unit (4);
- supplying a second type of piece goods (11), which is different from the first type, to the redistribution unit (4);
- picking up and depositing wherein the pick-up element (6) picks up both piece goods (11) of the first type and also piece goods (11) of the second type and deposits these piece goods (11) in such a way that a piece goods assortment (10) consisting of piece goods (11) of the first type and piece goods (11) of the second type is formed.

13. Method according to claim 12,
**characterized in that**
the at least one type of piece goods (11) is supplied to the redistribution unit (4) by a discharge unit (8).

## Revendications

1. Dispositif (1) adapté et destiné à retrier des ensembles d'emballages (10), comprenant un système d'alimentation (2), lequel est adapté et destiné à transporter un ensemble d'emballages (10) comprenant une pluralité d'emballages (11) agencés dans des positions géométriques prédéfinies le long d'un premier trajet de transport prédéfini, au moins une unité de redistribution (4) agencée le long du trajet de transport (T) de l'ensemble d'emballages (10), dans lequel l'unité de redistribution (4) comprend au moins un élément de réception (6) destiné à recevoir un seul emballage (11) de l'ensemble d'emballages (10) ou un groupe d'emballages (11) de l'ensemble d'emballages, et un système d'évacuation (8), qui est agencé le long du trajet de transport (T) en aval de l'unité de redistribution (4), dans lequel l'élément de réception (6) de l'unité de redistribution (4) est mobile dans au moins deux directions (X, Y) différentes, et ledit au moins un élément de réception (6) est configuré de telle sorte qu'il prélève différents emballages (11) ou groupes d'emballages (11) de l'ensemble d'emballages (10) et les transfère au système d'évacuation (8), par lequel les emballages sont évacués, **caractérisé en ce que**
la direction de transport dans laquelle le système d'alimentation (2) transporte les emballages (11) et la direction de transport dans laquelle le système d'évacuation (8) transporte les emballages (11) sont identiques et le dispositif comprend une unité de génération d'écarts (14), laquelle est agencée en aval du système d'alimentation (2) et en amont de l'unité de redistribution (4) et génère des écarts entre différents emballages (11) dans une direction de transport (T) de l'ensemble d'emballages (10).

2. Dispositif selon la revendication 1,
**caractérisé en ce que**
l'unité de génération d'écarts (14) comprend un système de transport (14), lequel transporte les emballages (11) dans la même direction de transport (T) que le système d'alimentation (2) mais à une vitesse de transport supérieure à celle du système d'alimentation (2).

3. Dispositif (1) selon au moins l'une des revendications précédentes, **caractérisé en ce que**
au moins un système de transport (2, 8, 14) est une bande de transport.

4. Dispositif (1) selon la revendication 3,
**caractérisé en ce que**
au moins deux bandes de transport (2, 8, 14) présentent différents coefficients de frottement par rapport aux emballages (11) à transporter.

5. Dispositif (1) selon au moins l'une des revendications précédentes, **caractérisé en ce que**
le dispositif (1) comprend un autre système d'évacuation (9), lequel est agencé à côté du premier système d'évacuation (8).

6. Dispositif (1) selon au moins l'une des revendications précédentes, **caractérisé en ce que**
le dispositif comprend une deuxième unité de redistribution (44), laquelle est agencée en aval du système d'évacuation (8), dans lequel cette deuxième unité de redistribution (44) comprend un élément de réception (46), lequel est mobile dans au moins deux directions différentes.

7. Dispositif (1) selon au moins l'une des revendications précédentes, **caractérisé en ce que**
au moins un système de transport (14) s'étend au moins en partie au-dessous de l'unité de redistribution (4).

8. Dispositif (1) selon au moins l'une des revendications précédentes, **caractérisé en ce que**
le dispositif (1) comprend une unité de transport de palettes (13) destinée à transporter des palettes.

9. Procédé destiné à retrier des ensembles de marchandises de détail (10) et en particulier des ensembles d'emballages (10), comprenant les étapes :
- d'amenée d'un ensemble de marchandises de détail (10) comprenant une pluralité de marchandises de détail (11) agencées dans des positions géométriques prédéfinies le long d'un premier trajet de transport (T) à une unité de redistribution (4, 44) au moyen d'un système d'alimentation (2) ;
- de réception de différentes marchandises de détail (11) ou de différents groupes de marchandises de détail (11) au moyen d'un élément de réception (6) de l'unité de redistribution (4, 44) ;
- de transfert des différentes marchandises de détail (11) ou des groupes de marchandises de détail (11) sur une unité d'évacuation (8, 62), dans lequel au moins certaines des marchandises de détail (11) sont déplacées dans au moins deux directions (X, Y) différentes l'une de l'autre entre la réception par l'élément de réception (6) et le transfert sur l'unité d'évacuation (8, 62) ;
- d'évacuation des marchandises de détail (11) au moyen de l'unité d'évacuation (8, 62), dans lequel le procédé est **caractérisé en ce que** les marchandises de détail (11) sont transportées par le système d'alimentation (2) et l'unité d'évacuation (8) dans la même direction de transport (T) et **en ce que** l'étape de procédé d'amenée d'un ensemble de marchandises de détail (10) comprenant une pluralité de marchandises de détail (11) agencées dans des positions géométriques prédéfinies le long d'un premier trajet de transport (T) à une unité de redistribution (4) au moyen d'un système d'alimentation (2) comprend les étapes suivantes :
- l'amenée de l'ensemble de marchandises de détail (10) à une unité de génération d'écarts (14) au moyen du système d'alimentation (2) ;
- la génération d'écarts entre différentes marchandises de détail (11) de l'ensemble de marchandises de détail (10) dans la direction de transport (T) de l'ensemble de marchandises de détail (10) au moyen de l'unité de génération d'écarts (14) ;
- l'amenée des différentes marchandises de détail (11) de l'ensemble de marchandises de détail (10) à l'unité de distribution (4).

10. Procédé selon la revendication 9,
**caractérisé en ce que**
les différentes marchandises de détail (11) sont transférées sur au moins deux unités d'évacuation (8, 9) juxtaposées.

11. Procédé selon la revendication 9 ou 10,
**caractérisé en ce que**
les marchandises de détail (11) sont transportées les unes derrière les autres en une seule rangée sur au moins une unité d'évacuation (8).

12. Procédé selon la revendication 9,
**caractérisé en ce qu'**il comprend en outre les étapes :
- d'amenée d'une première catégorie de marchandises de détail (11) à une unité de redistribution (4) ;
- d'amenée d'une deuxième catégorie de marchandises de détail (11), différente de la première catégorie, à l'unité de redistribution (4) ;
- de réception et de dépôt, dans lequel l'élément de réception (6) reçoit aussi bien des marchandises de détail (11) de la première catégorie que des marchandises de détail (11) de la deuxième catégorie et dépose ces marchandises de détail (11), de telle manière qu'un ensemble de marchandises de détail (10) est formé de marchandises de détail (11) de la première catégorie et de marchandises de détail (11) de la deuxième catégorie.

13. Procédé selon la revendication 12,
**caractérisé en ce que**
ladite au moins une catégorie de marchandises de détail (11) est amenée à l'unité de redistribution (4) par une unité d'évacuation (8).
